# EUROPEAN PATENT APPLICATION

(11) **EP 4 517 970 A1**
(43) Date of publication of application: **05.03.2025**
(21) Application number: 24196907.0
(22) Date of filing: 28.08.2024
(51) Int. Cl.: H01M 50/24, H01M 50/209, H01M 50/242, H01M 50/244, H01M 50/249, H01M 50/258, H01M 50/262, H01M 50/264

(54) **BATTERY MODULE, BATTERY PACK, AND VEHICLE**

(30) Priority: 28.08.2023 CN 202322335827 U
(71) Applicant: Eve Energy Co., Ltd., Huizhou, Guangdong 516006 (CN)
(72) Inventor: LI, Wenhang, Huizhou, Guangdong, 516006 (CN); LUO, Kun, Huizhou, Guangdong, 516006 (CN); CHEN, Zhiwei, Huizhou, Guangdong, 516006 (CN)
(74) Representative: Berggren Oy

(57) **Abstract**

A battery module includes a top plate (2), a bottom plate (5), two end plates (3), and two side plates (1). At least one of the two end plates (3) includes a plate body (31) including a hollow structure (34) provided with first reinforcing grooves (35) and a first connecting hole (343). At least one of the two side plates (1) includes a base plate (11) and a base mounting plate (12). The base plate (11) is provided with a fixing hole (113) penetrating through the base plate (11). The base mounting plate (12) is bent and connected to the base plate (11) and includes an outer connecting part (122) provided with a first mounting hole (1221). The first connecting hole (343) and the first mounting hole (1221) are configured for a first fixing member and a second fixing member to pass through, respectively.

## Description

### TECHNICAL FIELD

The present application relates to a technical field of power batteries, and in particular, to battery modules, battery packs, and vehicles.

### BACKGROUND

Battery modules include a plurality of plate bodies and a plurality of battery cells. The plurality of battery cells are fixed inside battery compartments surrounded by the plurality of plate bodies. Due to different usage environments, a part of the battery modules needs to be fixed on crossbeams of battery packs by using the plate bodies. Therefore, the plate bodies need a certain mechanical strength to support the battery modules and high bending resistance, and further need to meet requirements of lightweight to reduce material costs. However, at present, the plate bodies of most battery modules are formed by aluminum extrusion process, which cannot be lightweight. In this case, it is inconvenient to provide holes which do not affect an anti-expansion force of the plate bodies to connect with the crossbeams of the battery packs. Therefore, it is necessary to provide a lightweight support structure with better supporting force.

### SUMMARY

A battery module, a battery pack, and a vehicle provided by the embodiments of the present application improve a technical problem that it is difficult to balance between a mounting strength of the battery module and the lightweight of the battery module in the related art.

In a first aspect, a battery module provided by the embodiments of the present application includes a top plate and a bottom plate arranged opposite to each other, two end plates arranged opposite to each other, and two side plates arranged opposite to each other. The two end plates are connected to ends of the top plate and the bottom plate. At least one of the two end plates includes a plate body. The plate body includes a hollow structure. The hollow structure is provided with a plurality of first reinforcing grooves and at least one first connecting hole. The at least one first connecting hole is configured to be mounted on an outer bracket for mounting the battery module. The plate body is an integrally formed structure. At least two of the first reinforcing grooves are arranged at intervals along a first direction of the plate body. The at least one first connecting hole is located between the two first reinforcing grooves and penetrates the plate body along a second direction of the plate body. The two side plates are arranged opposite to each other located between the two end plates and connected to sides of the top plate and the bottom plate. At least one of the two side plates includes a base plate and a base mounting plate. The base plate is provided with a fixing hole penetrating through the base plate. The base mounting plate is bent and connected to the base plate. The base mounting plate includes an outer connecting part provided with a first mounting hole. The top plate, the bottom plate, the two end plates, and the two side plates enclose a battery compartment for mounting battery cells. The at least one first connecting hole of the end plates is configured for a first fixing member to pass through to fix the end plates on a case body of the battery pack. The first mounting hole of the side plates is configured for a second fixing member to pass through to fix the side plates on the case body of the battery pack.

In some embodiments, a connection force between the end plates and the case body of the battery pack is greater than a connection force between the side plates and the case body of the battery pack.

In some embodiments, the at least one of the two end plates and the at least one of the two side plates are integrally formed.

In some embodiments, at least one end of each of the side plates is provided with a second mounting hole communicated to a corresponding one of the first reinforcing grooves. An edge of the base plate of the side plates is provided with a second riveting hole arranged correspondingly to the second mounting hole. The second mounting hole and the second riveting hole are configured for a rivet to pass through.

In some embodiments, the hollow structure of the side plates is further provided with a plurality of second reinforcing grooves. At least two of the second reinforcing grooves are arranged at intervals along the first direction of the plate body of the end plates. Two of the second reinforcing grooves arranged at intervals enclose a second mounting cavity, and the second mounting cavity is correspondingly communicated to the first connecting hole.

In some embodiments, the hollow structure includes a first hollow structure and a second hollow structure. The first hollow structure includes a partition plate and a plurality of first reinforcing plates bent and connected to the partition plate. The partition plate and the plurality of first reinforcing plates enclose the plurality of first reinforcing grooves. The second hollow structure includes second reinforcing plates bent and connected to the partition plate and extending along a direction away from the first reinforcing plates. The second reinforcing plates and the partition plate enclose the second reinforcing grooves. A width of one end of each of the second reinforcing plates adjacent to the partition plate is greater than a width of one end of each of the second reinforcing plates away from the partition plate.

In some embodiments, two edges of the two end plates are provided with an insulation groove penetrating through a surface of the end plates facing the battery compartment. The insulation groove is configured to embed folded edges of insulation sheets located inside the battery compartment and wrapped on the end plates. The insulation groove is shielded by the side plates.

In some embodiments, the outer connecting part of the side plates is provided with an auxiliary hole. The auxiliary hole is configured to expose a relative position between the side plates and crossbeams on which the battery module is mounted.

In some embodiments, the top plate includes a cover body and a pressing member. An edge of the cover body is provided with a first avoidance groove penetrating through the cover body. The pressing member includes two pressing plates arranged opposite to each other. Each of the two pressing plates comprises a bending part and a pressing part connected to one end of the bending part. The other end of the bending part is connected to a groove wall of the first avoidance groove. The pressing part protrudes from the cover body. The two pressing plates and the groove wall of the first avoidance groove enclose a first mounting cavity configured for accommodating output terminals of a circuit board.

In a second aspect, a battery pack provided by the embodiments of the present application includes the battery module mentioned above, a first fixing member, a second fixing member, and a case body. The battery module is accommodated inside the case body, the first fixing member passes through the at least one first connecting hole of the end plates to fix the end plates on the case body. The second fixing member passes through the first mounting hole of the side plates to fix the side plates on the case body.

In a third aspect, a vehicle provided by the embodiments of the present application includes the battery pack mentioned above.

The beneficial effects of the present application are illustrated below. In the embodiments of the present application, by providing at least one first connecting hole on the end plates, and providing a first mounting hole on the side plates, the battery module can be mounted and fixed on crossbeams of the battery pack. In addition, the side plates include a plurality of first reinforcing grooves and a plurality of first reinforcing plate, which can reduce a weight of the end plates without reducing the bending resistance of the end plates themselves, thereby providing a lightweight battery module with a strong supporting force. Under a condition that an anti-expansion force of the battery module is ensured, it is convenient for mounting the battery module and realizing the lightweight of the battery module.

### BRIEF DESCRIPTION OF THE DRAWINGS

In order to more clearly explain technical solutions in specific embodiments of the present application or the prior art, the drawings needed to be used in the description of the specific embodiments or the prior art will be briefly introduced below. It is obvious that the drawings in the following description illustrate some embodiments of the present application. For those of ordinary skill in the art, other drawings may be obtained based on these drawings without creative efforts.
FIG. 1 is a three-dimensional schematic view of a battery module according to an embodiment of the present application.
FIG. 2 is an exploded view of the battery module according to an embodiment of the present application.
FIG. 3 is a three-dimensional schematic view of a top plate according to an embodiment of the present application.
FIG. 4 is a three-dimensional schematic view of a side plate according to an embodiment of the present application.
FIG. 5 is an enlarged schematic view of a position A shown in FIG. 4.
FIG. 6 is a schematic structural view of the side plate and an output stage base according to an embodiment of the present application.
FIG. 7 is a three-dimensional schematic view of the output stage base according to an embodiment of the present application.
FIG. 8 is an exploded view from another perspective of the battery module according to an embodiment of the present application.
FIG. 9 is a three-dimensional schematic view of an end plate according to an embodiment of the present application.
FIG. 10 is a rear view of the end plate according to an embodiment of the present application.
FIG. 11 is a front view of the end plate according to an embodiment of the present application.
FIG. 12 is a bottom view of the end plate according to an embodiment of the present application.
FIG. 13 is a top view of the end plate according to an embodiment of the present application.

### Reference numerals:

1, side plate; 2, 11, base plate; 111, first surface; 112, second surface; 113, fixing hole; 1131, arc-shaped wall; 1132, flat wall; 114, second avoidance groove; 115, second riveting hole; 12, base mounting plate; 121, base mounting part; 122, outer connecting part; 1221, first mounting hole; 1222, auxiliary hole; 123, first weight reduction groove; 13, connecting plate; 131, second weight reduction groove; 132, second connecting hole; 14, output stage base; 2, top plate; 21, cover body; 211, first cover surface; 212, second cover surface; 213, first riveting hole; 214, first positioning hole; 215, first avoidance groove; 22, pressing member; 221, pressing plate; 2211, bending part; 2212, pressing part; 222, first mounting cavity; 223, limiting groove; 23, wiring harness mounting frame; 231, connecting part; 232, fixing part; 233, accommodation groove; 24, marking member; 241, marking groove; 3, end plate; 31, plate body; 311, first part; 312, second part; 3121, mounting groove; 31211, third reinforcing groove; 313, first glue overflow groove; 314, second glue overflow groove; 315, baffle plate; 316, insulating groove; 32, first plate; 321, second mounting hole; 33, second plate; 34, hollow structure; 341, first hollow structure; 3411, partition plate; 3412, first reinforcing plate; 342, second hollow structure; 3421, second reinforcing plate; 3422, booster plate; 343, first connecting hole; 35, first reinforcing groove; 36, second reinforcing groove; 37, second mounting cavity; 38, second positioning hole; 4, weight reduction hole; 5, bottom plate; 6, buffer foam; 7, insulating sheet.

### DETAILED DESCRIPTION

The technical solutions of the present application will be clearly and completely described below with reference to the accompanying drawings. Obviously, the described embodiments are part of the embodiments of the present application, rather than all the embodiments. All other embodiments obtained by persons of ordinary skill in the art based on the embodiments of the present application without creative efforts shall fall within the protection scope of the present application. In addition, it should be understood that the specific embodiments described herein are merely for illustration and explanation of the present application, and are not intended to limit the present application. In the present application, in the absence of a contrary explanation, the orientational terms, such as "up" and "down", generally refer to the upper and lower in the actual use or working state of the device, specifically the drawing direction in the attached drawings; While "inner" and "outer" are for the outline of the device.

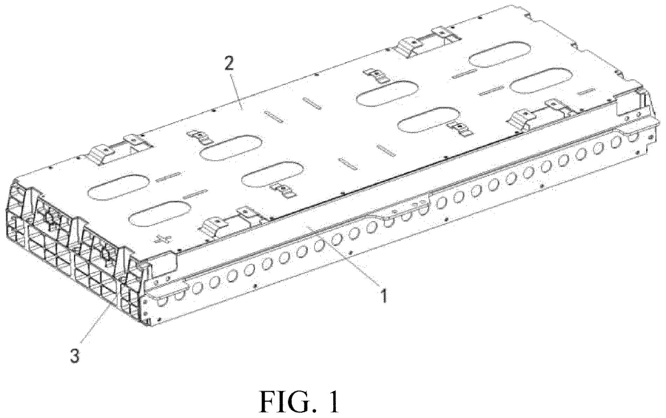

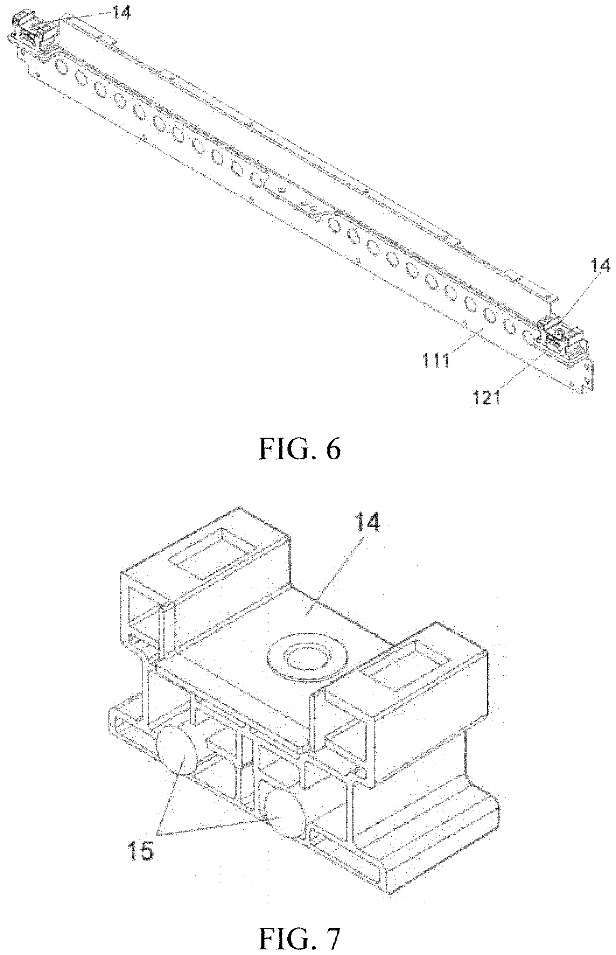

Referring to FIG. 1 to FIG. 13, a battery module provided by the embodiments of the present application includes a top plate 2, a bottom plate 3 arranged opposite to the top plate 2, two end plates 3 arranged opposite to each other, and two side plates 1 arranged opposite to each other.

The two end plates 3 are connected to ends of the top plate 2 and the bottom plate 5. At least one of the two end plates 3 includes a plate body 31, two first plates 32, two second plates 33, and a hollow structure 34. The two first plates 32 are arranged opposite to each other and connected to two sides of the plate body 31. The two second plates 33 are arranged opposite to each other and connected to two sides of the plate body 31. The hollow structure 34 is located between the two first plates 32 and the two second plates 33. The hollow structure 34 includes a first hollow structure 341. The first hollow structure 341 includes a partition plate 3411 arranged opposite to the second plates 33 and a plurality of first reinforcing plates 3412 bent and connected to the partition plate 3411. The partition plate 3411, the plurality of first reinforcing plates 3412, the other one of the two second plates 33, and the two first plates 32 enclose a plurality of first reinforcing grooves 35. A surface of at least one of the first reinforcing plates 3412 connected to the partition plate 3411 is provided with at least one first connecting hole 343 penetrating through the surface to the other one of the second plates 33.

The two side plates 1 are located between the two end plates 3 and connected to sides of the top plate 2 and the bottom plate 5. At least one of the two side plates 1 includes a base plate 11 and a base mounting plate 12. The base plate 11 includes a first surface 111 and a second surface 112 opposite to each other. The base plate 11 is provided with fixing holes 113 penetrating through the first surface 111 and the second surface 112. The base mounting plate 12 is bent and connected to the first surface 111. The base mounting plate 12 includes an outer connecting part 122 provided with at least one first mounting hole 1221. The top plate 2, the bottom plate 5, the two end plates 3, and the two side plates 1 enclose a battery compartment for mounting battery cells.

The first connecting hole 343 of the end plates 3 is configured for a first fixing member to pass through to fix the end plates 3 on a case body of the battery pack. The first mounting hole 1221 of the side plates 1 is configured for a second fixing member to pass through to fix the side plates 1 on the case body of the battery pack. Both the first fixing member and the second fixing member include bolts.

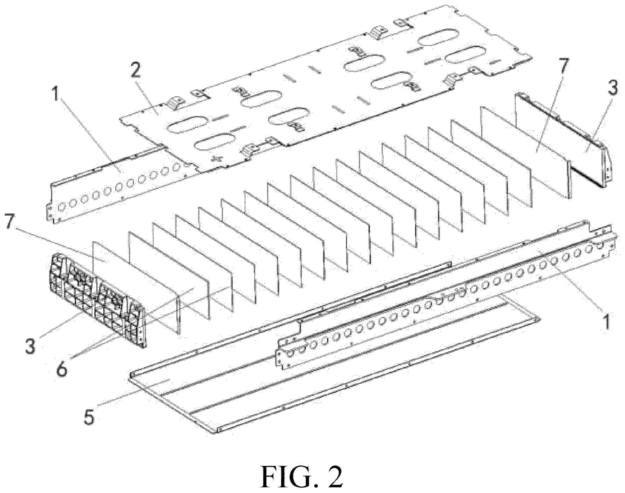

Referring to FIG. 1 and FIG. 2, a battery module provided by some embodiments of the present application includes a top plate 2, a bottom plate 5, two side plates 1 arranged opposite to each other, and two end plates 3 arranged opposite to each other.

The top plate 2 and the bottom plate 5 are arranged opposite to each other. The two side plates 1 are located between the top plate 2 and the bottom plate 5. Upper and lower ends of each of the side plates 1 are bolted to connect the top plate 2 and the bottom plate 5. The two end plates 3 are located between the top plate 2 and the bottom plate 5. Upper and lower ends of each of the end plates 3 are welded with the top plate 2 and the bottom plate 5. Left and right ends of each of the end plates 3 are riveted with the two side plates 1. The top plate 2, the bottom plate 5, the two end plates 3, and the two end plates 1 enclose a battery compartment for mounting battery cells.

A plurality of buffer foams 6 are arranged side by side inside the battery compartment. A single battery cell is mounted between the adjacent two of the buffer foams 6. The buffer foams 6 are configured to provide a pre-tightening force of the battery module.

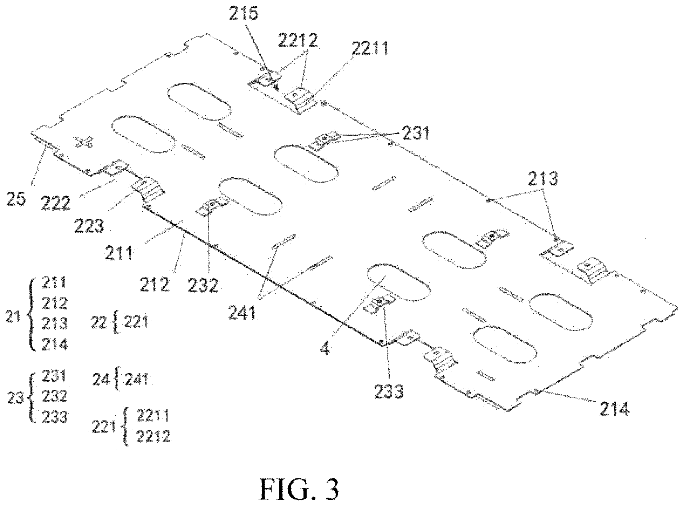

Referring to FIG. 2 and FIG. 3, the top plate 2 includes a cover body 21, at least one pressing member 22, a wire harness mounting member, a marking member 24, a buffer member, and an insulating film.

The cover body 21 includes a first cover surface 211 and a second cover surface 212 arranged opposite to each other. The first cover surface 211 includes a central region, two first regions, and two second regions. The two first regions are respectively located at two ends of the central region, and the two second regions are respectively located at two ends of the first region away from the central region. Two edges of the cover body 21 along a width direction are both provided with two first avoidance grooves 215 penetrating through the first cover surface 211 and the second cover surface 212. Four first avoidance grooves 215 are arranged in pairs with respect to the width direction and a length direction of the cover body 21, and are evenly distributed in the two second regions.

The pressing member 22 includes two pressing plates 221 arranged opposite to each other. Each of the two pressing plates 221 includes a bending part 2211 and a pressing part 2212 connected to one end of the bending part 2211, and the other end of the bending part 2211 is connected to a groove wall of a corresponding one of the first avoidance grooves 215. The pressing part 2212 protrudes from the first cover surface 211. The two pressing plates 221 and the groove wall of the corresponding one of the first avoidance grooves 215 surround a first mounting cavity 222 for accommodating output terminals of a circuit board. The first mounting cavity 222 is capable of better fixing the output terminals of the circuit board. Furthermore, the second cover surface 212 can be adhered to a surface of the battery cells of the battery module. Compared with a structure of the cover body 21 in the related art, the first mounting cavity 22 can provide a sufficient anti-expansion force to the battery cells. The pressing part 2212 is provided with a limiting groove 223 communicated to the first mounting cavity 222. The limiting groove 223 is configured for an extending part of a cells contact system (CCS) bracket to extend into it, thereby further playing a limiting role.

The two edges of the cover body 21 along the width direction are both provided with a plurality of first riveting holes 213 penetrating through the first cover surface 211 and the second cover surface 212. The first riveting holes 213 are configured to rivet the side plates 1 of the battery module. Two edges of the cover body 21 along the length direction are provided with a first positioning hole 214, and the first positioning hole 214 is configured to fix a relative position between the end plates 3 and the cover body 21 of the battery module before the end plates 3 and the cover body 21 are welded.

The wire harness mounting frame 23 includes two connecting parts 231 arranged opposite to each other, a fixing part 232 connected between the two connecting parts 231, and a fixing bolt. The two connecting parts 231 are connected to the first cover surface 211. The fixing part 232 and the cover body 21 enclose an accommodation groove 233 for accommodating a wire harness. The fixing bolt is screwed to the fixing part 232 and extends into the accommodation groove 233 to press the wire harness. In other embodiments, the fixing bolt may further be replaced with a cable tie. The wire harness is tied to the fixing part 232 by the cable tie to realize the installation and fixation of the wire harness. Four wire harness mounting frames 23 are arranged evenly in the two first regions. Two of the four wire harness mounting frames 23 on each of the first regions are arranged opposite to each other with respect to the width direction of the cover body 21. The two of the wire harness mounting frames 23 on different first regions are arranged opposite to each other with respect to the center region.

The marking member 24 includes two marking grooves 241 formed on the first cover surface 211 and arranged opposite to each other. There are four marking members 24. Two of the marking members 24 are located in the central region and arranged opposite to each other along the width direction of the cover body 21, and the other two of the marking members 24 are respectively located in the two second regions and arranged opposite to each other along the length direction of the cover body 21. The two marking grooves 241 of each of the marking members 24 define a region for mounting the buffer member.

There are four buffer members in one-to-one correspondence to the four marking members 24. The buffer members are mounted on the first cover surface 211 and cover the marking grooves 241. Virtual connecting lines between the four buffer members form a diamond shape. The buffer members can absorb part of amplitude between the buffer members and an outer case cover to ensure the flatness of an upper cover as much as possible. In this embodiment, the buffer members are the buffer foams 6, and are disposed on the first cover surface 211 by adhesion.

Both the two first regions and the two second regions are provided with two weight reduction holes 4 oppositely arranged along the width direction of the cover body 21. The weight reduction holes 4 penetrate through the first cover surface 211 and the second cover surface 212. The two weight reduction holes 4 located on the first regions are located between two of the wire harness mounting frames 23. The weight reduction holes 4 can play a role in lightweighting the cover body 21.

The insulating film is disposed on the second cover surface 212 by a hot pressing process. The insulating film is exposed by the four weight reduction holes 4. The insulating film is a black PET film.

The two first regions are respectively provided with a positive electrode mark and a negative electrode mark for personnel identification.

The cover body 21 and the pressing member 22 are integrally formed, and the cover body 21 and the pressing member 22 are manufactured by a die stamping process. The first positioning hole 214 and the weight reduction holes 4 are stamped out at the same time, and the positive electrode mark, the negative electrode mark, and the marking grooves 241 are further formed by engraving.

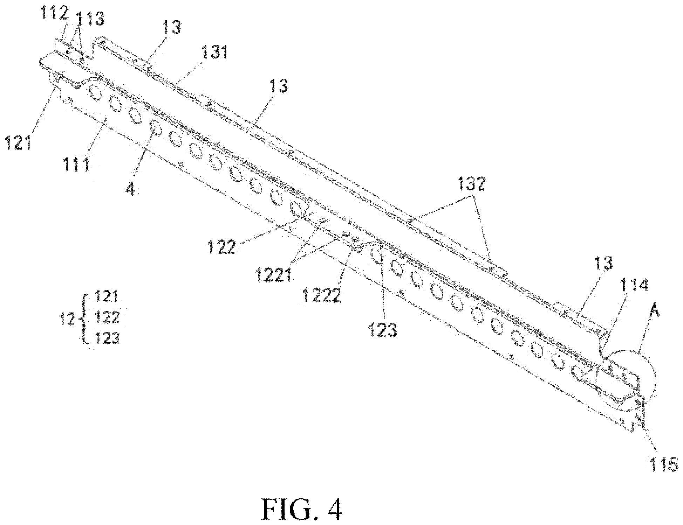

Referring to FIG. 4, FIG. 5, FIG. 6, and FIG. 7, one of the side plates 1 includes a base plate 11, a base mounting plate 12, and a connecting plate 13.

Specifically, two opposite sides of the base plate 11 are configured for bolt connecting to the top plate 2 and the bottom plate 5 of the battery module. The two opposite ends of the base plate 11 are provided with a plurality of second riveting holes 115, and the second riveting holes 115 are configured for riveting with the two opposite end plates 3 of the battery module. The base plate 11 includes a first surface 111 and a second surface 112 arranged opposite to each other. Both the first surface 111 and the second surface 112 are connected to the two opposite sides and the two opposite ends of the base plate 11. The base plate 11 is provided with four fixing holes 113 penetrating through the first surface 111 and the second surface 112. Two of the fixing holes 113 are adjacent to one of the two opposite ends of the base plate 11, and the other two of the fixing holes 113 are adjacent to the other one of the two opposite ends of the base plate 11. The base plate 11 is further provided with the weight reduction holes 4 penetrating through the first surface 111 and the second surface 112. In another embodiment, the base plate 11 is further provided with the insulating film formed on the second surface 112 by cold pressing, and the insulating film is exposed by the weight reduction holes 4.

The base mounting plate 12 includes two base mounting parts 121 arranged opposite to each other and an outer connecting part 122 located between the two base mounting parts 121. The two base mounting parts 121 correspond to the fixing holes 113 adjacent to the two opposite ends of the base plate 11, respectively. Both the base mounting parts 121 and the outer connecting part 122 are bent and connected to the first surface 111 of one of the side plates 1. A first weight reduction groove 123 is provided between the base mounting part 121 and the outer connecting part 122.

The base mounting part 121 is configured to support a bottom part of an output stage base 14. The fixing holes 113 are configured for the fixing member to pass through a side of the output stage base to pass through and fix the output stage base 14 on the base plate 11. An edge of the base plate 11 is provided with a second avoidance groove 114 penetrating through the first surface 111 and the second surface 112, and the second avoidance groove 114 is located on one side of the fixing holes 113 away from the base mounting portion 121. The second avoidance groove 114 is configured for a conductive row of the battery module to extend to connect to the output stage base 14.

The outer connecting part 122 is provided with two first mounting holes 1221 and an auxiliary hole 1222. The first mounting holes 1221 are configured to bolt connect the crossbeams to which the battery module is mounted. The auxiliary hole 1222 is located at one end of one of the first mounting holes 1221 away from the other one of the first mounting holes 1221. When the battery module is mounted, the crossbeams on which the battery module is mounted are located below the base mounting plate 12, and the auxiliary hole 1222 is configured to expose a relative position between the side plates 1 and the crossbeams on which the battery module is mounted, so that the battery module and the crossbeams are accurately mounted. In addition, the auxiliary hole 1222 can further provide a fixed position when the battery module is hoisted.

The connecting plate 13 is located on one side of the fixing holes 113 facing away from the base mounting plate 12, and is bent and connected to an edge of the second surface 112 and extends in a direction facing away from the base mounting plate 12. The connecting plate 13 is provided with a plurality of second connecting holes 132 for bolt connecting the top plate 2 of the battery module. The connecting plate 13 is further provided with a second weight reduction groove 131 corresponding to the first weight reduction groove 123, and a width of the first weight reduction groove 123 is less than a width of the second weight reduction groove 131. The base plate 11, the base mounting plate 12, and the connecting plate 13 are integrally formed. The base plate 11, the base mounting plate 12, and the connecting plate 13 are formed by an aluminum extrusion process to reduce the use of materials, thereby reducing the cost, and realizing the lightweight of the base mounting plate 12.

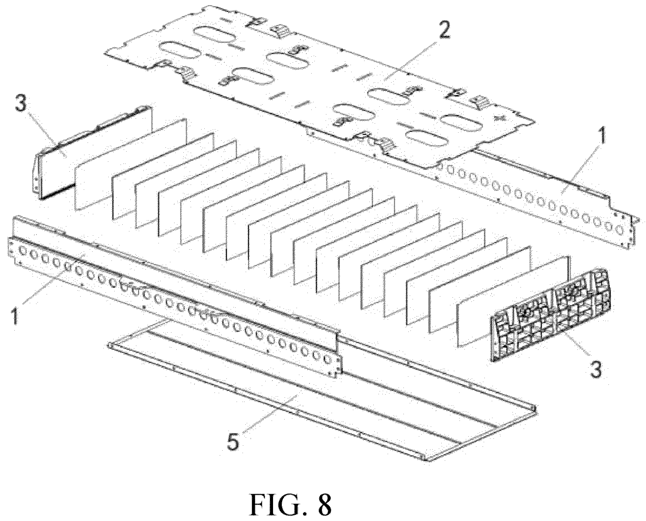

Referring to FIG. 8, the other one of the side plates 1 is different from the side plate 1 mentioned above in that the base mounting plate 12 and the avoidance grooves are not included. In addition, there are two outer connecting parts 122 and three first weight reduction grooves 123. One of the first weight reduction grooves 123 is located between the two outer connecting parts 122 and does not correspond to the second weight reduction groove 131, and the other two of the first weight reduction grooves 123 are located on two sides of the two outer connecting parts 122 and correspond to the second weight reduction groove 131. Each of the two outer connecting parts 122 is provided with one first mounting hole 1221, and each of the two outer connecting parts 122 is provided with one auxiliary hole 1222.

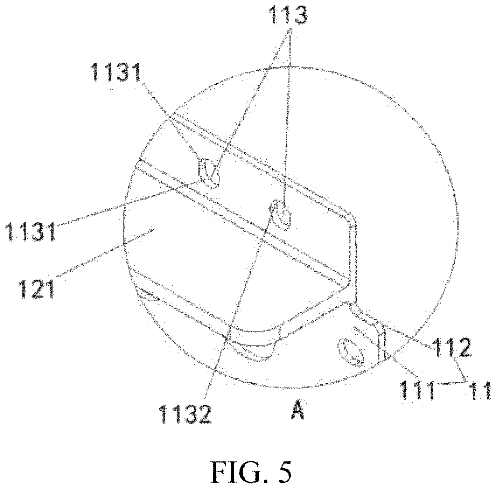

Referring to FIG. 5, a hole wall of each of the fixing holes 113 includes two arc-shaped walls 1131 arranged opposite to each other and two flat walls 1132 arranged opposite to each other. Each of the flat walls 1132 is located between the two arc-shaped walls 1131 and connected to the two arc-shaped walls 1131. When the fixing holes 113 are passed through by the fixing member of the side of the output stage base, the hotmelt fixing member extends from one end of the second surface 112 to fill the fixing holes 113 and covers the second surface 112, and abuts against the second surface 112 after being cured, so as to realize the function of stable installation of the output stage base. The flat walls 1132 are perpendicular to the base mounting plate 12, so that one end of the hot-melted fixing member fills the fixing holes 113 better by gravity, thereby eliminating the phenomenon that the output stage base can not be jammed in and tightly jammed in the related art.

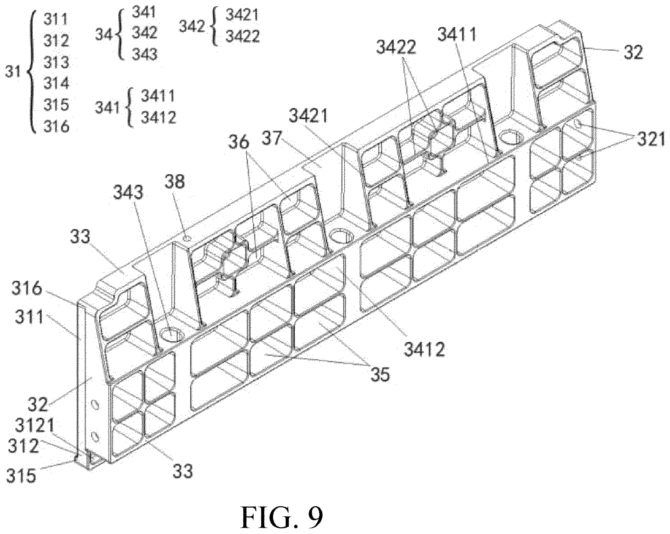

Referring to FIG. 9, FIG. 10, and FIG. 11, each of the end plates 3 includes a plate body 31. The plate body 31 includes a hollow structure 34. The hollow structure 34 includes a first hollow structure 341, a second hollow structure 342, two first plates 32, and two second plates 33.

The plate body 31 includes a first part 311 and a second part 312. The two first plates 32 and the two second plates 33 are perpendicular to the plate body 31. The two first plates 32 are oppositely arranged along a first direction of the plate body 31 and connected to two ends of the first part 311. The two second plates 33 are oppositely arranged along a second direction of the plate body 31 and connected to two sides of the first part 311. The two second plates 33 are located between the two first plates 32. The first direction of the plate body 31 is a length direction of the plate body 31, and the second direction of the plate body 31 is a width direction of the plate body 31. The second part 312 is parallel to the first part 311 and connected to one side of the first part 311. Both the first hollow structure 341 and the second hollow structure 342 are located on the first part 311. The first hollow structure 341 is provided with a plurality of first reinforcing grooves 35, and the second hollow structure 342 is provided with a plurality of second reinforcing grooves 36. The second part 312 is provided with a mounting groove 3121 facing the second plate 33 adjacent to the second part 312, and the mounting groove 3121 is configured to embed the outer bracket for mounting the battery module. A groove bottom of the mounting groove 3121 is provided with a plurality of third reinforcing grooves 31211 arranged along the first direction of the plate body 31 to further realize the lightweight of the end plates 3.

The first hollow structure 341 includes a partition plate 3411 and a plurality of first reinforcing plates 3412. The partition plate 3411 is disposed opposite to one of the second plates 33. The partition plate 3411 is located between the two first plates 32 and divides the first part 311 into a first mounting region and a second mounting region. The first mounting region is located at one side of the second mounting region adjacent to the second part 312. The plurality of first reinforcing plates 3412 are bent and connected to the partition plate 3411. The plurality of first reinforcing plates 3412, the partition plate 3411, and the second plate 33 adjacent to the second part 312 enclose the plurality of first reinforcing grooves 35. Through the first reinforcing grooves 35, the lightweight design of the end plates 3 of the battery module is realized without sacrificing the anti-expansion force of the battery module.

A surface of at least one of the first reinforcing plates 3412 connected to the partition plate 3411 is provided with a first connecting hole 343. The first connecting hole 343 penetrates through the surface to the second plate 33 adjacent to the second part 312, and the first connecting hole 343 is configured to mount the outer bracket for mounting the battery module. The two first plates 32 are both provided with a second mounting hole 321, and the second mounting hole 321 is configured for mounting the side plates 1 of the battery module. The second mounting hole 321 is communicated to a corresponding one of the first reinforcing grooves 35. The plate body 31 has an integrally molded structure.

A plurality of second hollow structures 342 are provided, and all the second hollow structures 342 are located in the second mounting region. The second hollow structure 342 includes a plurality of second reinforcing plates 3421 and a plurality of booster plates 3422. The plurality of second reinforcing plates 3421 are connected between the second plate 33 adjacent to the second mounting region and the partition plate 3411. The plurality of second reinforcing plates 3421, the partition plate 3411, and the second plate 33 adjacent to the second mounting region enclose the second reinforcing grooves 36. At least two second hollow structures 342 are arranged at intervals along the first direction of the plate body 31. Two of the second hollow structures 342 enclose a second mounting cavity 37 communicated to the corresponding first connecting hole 343. When the first connection hole 343 is configured for mounting the outer bracket for mounting the battery module, bolt used can extend into the first connection hole 343 through the second mounting cavity 37, thereby improving the convenience of mounting.

A width of one end of the second reinforcing plate 3421 adjacent to the first reinforcing plate 3412 is greater than a width of one end of the second reinforcing plate 3421 away from the first reinforcing plate 3412. That is, the second reinforcing plate 3421 adopts a trapezoidal structure to achieve the lightweight of the end plates 3. The plurality of booster plates 3422 are provided in the second reinforcing grooves 36, and serve to further increase the anti-expansion force of the plate body 31.

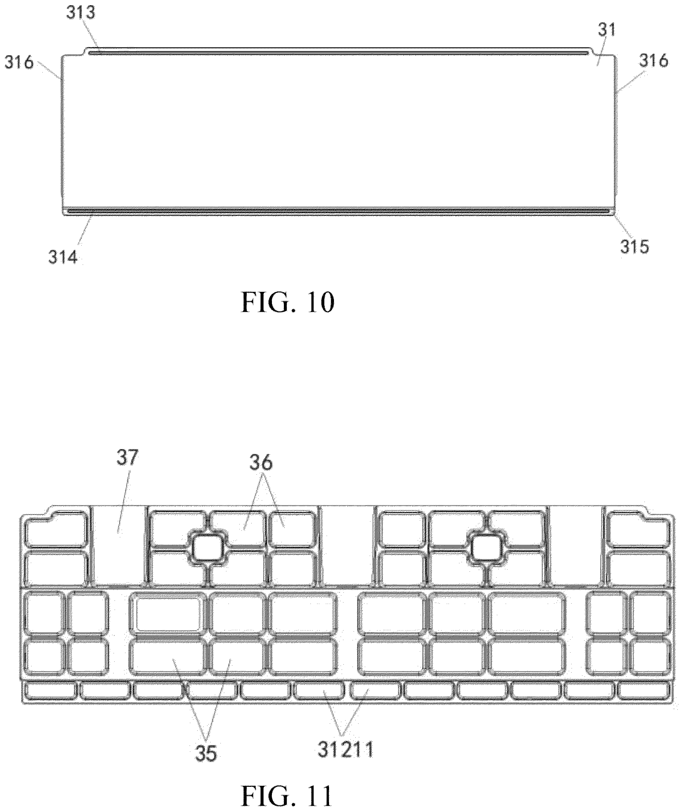

Referring to FIG. 10, a surface of the first part 311 facing away from the hollow structure 34 is configured for foam bonding. The surface of the first part 311 facing away from the hollow structure 34 is provided with a first glue overflow groove 313, and the first glue overflow groove 313 is adjacent to an edge of one side of the plate body 31. That is, the first glue overflow groove 313 is located at an edge of the first part 311 away from the second part 312 and configured for accommodating an overflow glue for bonding a foam.

One side of the second part 312 facing away from the hollow structure 34 is provided with a baffle plate 315 protruding from a surface of the second part 312. The baffle plate 315 is provided at the edge of the other side of the plate body 31, that is, the edge of the second part 312 away from the first part 311. The baffle plate 315 is configured to restrict the movement of the foam. One end of the baffle plate 315 away from the second part 312 is provided with a second glue overflow groove 314. During the actual use of the end plates 3, the second glue overflow groove 314 is generally located below the first glue overflow groove 313. The second glue overflow groove 314 can collect part of the glue liquid flowing out of the foam under the action of gravity.

A surface of the plate body 31 facing away from the hollow structure 34 is provided with two insulating grooves 316. The two insulating grooves 316 are respectively located at two ends of the plate body 31, and the insulating grooves 316 are embedded with insulating sheets 7 wrapped on the foams. In actual assembly, after the insulating sheets 7 are bonded to the foams, the end plates 3 are mounted with other battery modules before the colloid is cured. In this case, the insulating sheets 7 are easy to slide and displace, which affects the insulating effect. A folded edge of the insulating sheets 7 is put into the insulating grooves 316 to play a limiting role on the insulating sheets 7.

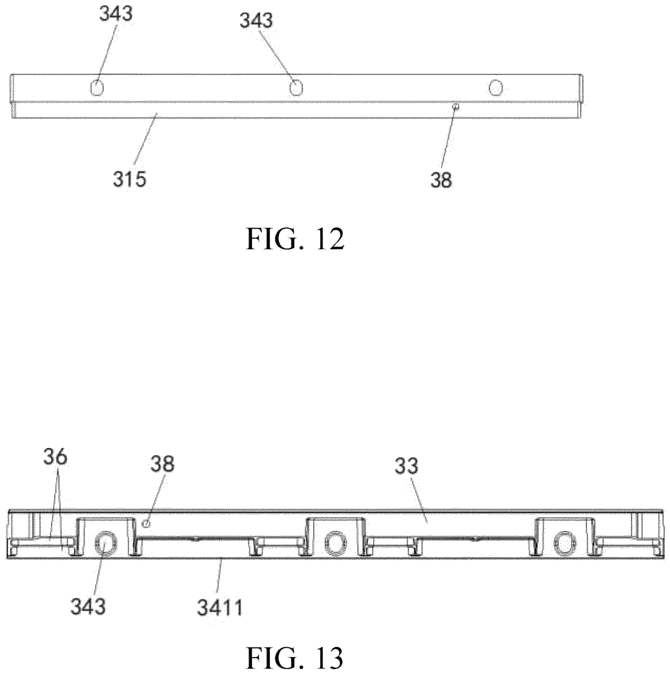

Referring to FIG. 12 and FIG. 13, the second plate 33 away from the second part 312 is configured for welding the top plate 2 of the battery module. The above-mentioned second plates 33 and the baffle plate 315 are both provided with a second positioning hole 38 penetrating the second plates 3 and the baffle plate 315. One end of the baffle plate 315 facing away from the second plates 3 is configured for welding the bottom plate 5 of the battery module. The second positioning hole 38 is configured to define a position between the end plates 3 and the top plate 2 when welding the end plates 3 and the bottom plate 5 and when welding the end plates 3 and the bottom plate 5, thereby improving welding accuracy.

In this embodiment, the end plates 3 generally adopt an aluminum extrusion process. After extrusion molding, the end plates 3 are machined to form grooves or holes to achieve cooperation with other structures. In addition, a traceability code containing processing information is added to the end plates 3 by machining. However, in the present application, the plate body 31 and the baffle plate 315 are integrally formed, and the end plates 3 are formed through a mold by an aluminum casting process to form the plate body 31 and the baffle plate 315. Different traceability codes are formed by changing the insert of the mold in the casting process. The first reinforcing grooves 35, the second reinforcing grooves 36, the first connecting hole 343, the second mounting hole 321, the second mounting cavity 37, and the second positioning hole 38 are simultaneously formed in the casting process, without additional machining opening, and the processing steps are reduced.

When the battery module is mounted completely, a thickness of the foams bonded to the plate body 31 is compressed from 3 mm to 2 mm, thereby acting as a buffer for the battery cells of the battery module.

A battery pack further provided by the embodiments of the present application includes the battery module mentioned above, a first fixing member, a second fixing member, and a case body. Both the first fixing member and the second fixing member adopt bolts.

A vehicle further provided by the embodiments of the present application includes a battery pack above mentioned.

The embodiments of the present application are described in detail above. The principle and implementations of the present application are described in this specification by using specific examples. The description about the foregoing embodiments is merely provided to help understand the method and core ideas of the present application. In addition, persons of ordinary skill in the art can make modifications in terms of the specific implementations and application scopes according to the ideas of the present application. Therefore, the content of this specification shall not be construed as a limit to the present application.

## Claims

1. A battery module, **characterized in that** the battery module comprises:
a top plate (2);
a bottom plate (5) arranged opposite to the top plate (2);
two end plates (3) arranged opposite to each other, connected to ends of the top plate (2) and the bottom plate (5), wherein at least one of the two end plates (3) comprises a plate body (31), the plate body (31) comprises a hollow structure (34), the hollow structure (34) is provided with a plurality of first reinforcing grooves (35) and at least one first connecting hole (343), and the at least one first connecting hole (343) is configured to be mounted on an outer bracket for mounting the battery module; and
two side plates (1) arranged opposite to each other, located between the two end plates (3) and connected to sides of the top plate (2) and the bottom plate (5), wherein at least one of the two side plates (1) comprises a base plate (11) and a base mounting plate (12), the base plate (11) is provided with a fixing hole (113) penetrating through the base plate (11), the base mounting plate (12) is bent and connected to the base plate (11), the base mounting plate (12) comprises an outer connecting part (122) provided with a first mounting hole (1221), and the top plate (2), the bottom plate (5), the two end plates (3), and the two side plates (1) enclose a battery compartment for mounting battery cells;
wherein the plate body (31) is an integrally formed structure, at least two of the first reinforcing grooves (35) are arranged at intervals along a first direction of the plate body (31), and the at least one first connecting hole (343) is located between the two first reinforcing grooves (35) and penetrates through the plate body (31) along a second direction of the plate body (31); and
wherein the at least one first connecting hole (343) of the end plates (3) is configured for a first fixing member to pass through to fix the end plates (3) on a case body of the battery pack, and the first mounting hole (1221) of the side plates (1) is configured for a second fixing member to pass through to fix the side plates (1) on the case body of the battery pack.

2. The battery module according to claim 1, **characterized in that** a connection force between the end plates (3) and the case body of the battery pack is greater than a connection force between the side plates (1) and the case body of the battery pack.

3. The battery module according to claim 1, **characterized in that** the at least one of the two end plates (3) and the at least one of the two side plates (1) are integrally formed.

4. The battery module according to claim 1, **characterized in that** at least one end of each of the side plates (1) is provided with a second mounting hole (321) communicated to a corresponding one of the first reinforcing grooves (35), an edge of the base plate (11) of the side plates (1) is provided with a second riveting hole (115) arranged correspondingly to the second mounting hole (321), and the second mounting hole (321) and the second riveting hole (115) are configured for a rivet to pass through.

5. The battery module according to claim 1, **characterized in that** the hollow structure (34) of the side plates (1) is further provided with a plurality of second reinforcing grooves (36), at least two of the second reinforcing grooves (36) are arranged at intervals along the first direction of the plate body (31) of the end plates (3), two of the second reinforcing grooves (36) arranged at intervals enclose a second mounting cavity (37), and the second mounting cavity (37) is correspondingly communicated to the first connecting hole (343).

6. The battery module according to claim 5, **characterized in that** the hollow structure (34) comprises a first hollow structure (341) and a second hollow structure (342), the first hollow structure (341) comprises a partition plate (3411) and a plurality of first reinforcing plates (3412) bent and connected to the partition plate (3411), and the partition plate (3411) and the plurality of first reinforcing plates (3412) enclose the plurality of first reinforcing grooves (35); and
wherein the second hollow structure (342) comprises second reinforcing plates (3421) bent and connected to the partition plate (3411) and extending along a direction away from the first reinforcing plates (3412), the second reinforcing plates (3421) and the partition plate (3411) enclose the second reinforcing grooves (36), and a width of one end of each of the second reinforcing plates (3421) adjacent to the partition plate (3411) is greater than a width of one end of each of the second reinforcing plates (3421) away from the partition plate (3411).

7. The battery module according to claim 1, **characterized in that** two edges of the two end plates (3) are provided with an insulation groove (316) penetrating through a surface of the end plates (3) facing the battery compartment, the insulation groove (316) is configured to embed folded edges of insulation sheets (7) located inside the battery compartment and wrapped on the end plates (3), and the insulation groove (316) is shielded by the side plates (1).

8. The battery module according to claim 1, **characterized in that** the outer connecting part (122) of the side plates (1) is provided with an auxiliary hole (1222), and the auxiliary hole (1222) is configured to expose a relative position between the side plates (1) and crossbeams on which the battery module is mounted.

9. The battery module according to claim 1, **characterized in that** the top plate (2) comprises:
a cover body (21), wherein an edge of the cover body (21) is provided with a first avoidance groove (215) penetrating through the cover body (21); and
a pressing member (22) comprising two pressing plates (221) arranged opposite to each other, wherein each of the two pressing plates (221) comprises a bending part (2211) and a pressing part (2212) connected to one end of the bending part (2211), the other end of the bending part (2211) is connected to a groove wall of the first avoidance groove (215), the pressing part (2212) protrudes from the cover body (21), and the two pressing plates (221) and the groove wall of the first avoidance groove (215) enclose a first mounting cavity (222) configured for accommodating output terminals of a circuit board.

10. The battery module according to claim 1, **characterized in that** the base plate (11) comprises a first surface (111) and a second surface (112) arranged opposite to each other, the top plate (2) further comprises weight reduction holes (4) oppositely arranged along a width direction of the cover body (21), and the weight reduction holes (4) penetrate through the first cover surface (211) and the second cover surface (212).

11. The battery module according to claim 1, **characterized in that** the base plate (11) further comprises a first surface (111) and a second surface (112) arranged opposite to each other, the first surface (111) and the second surface (112) are connected to two opposite sides and two opposite ends of the base plate (11), and the base plate (11) is provided with four fixing holes (113) penetrating through the first surface (111) and the second surface (112);
wherein the base mounting plate (12) comprises two base mounting parts (121) arranged opposite to each other and an outer connecting part (122) located between the two base mounting parts (121), both the base mounting parts (121) and the outer connecting part (122) are bent and connected to the first surface (111) of one of the side plates (1), and a first weight reduction groove (123) is provided between the base mounting part (121) and the outer connecting part (122).

12. The battery module according to claim 11, **characterized in that** each of the side plates (1) further comprises a connecting plate (13) located on one side of the fixing holes (113) facing away from the base mounting plate (12), and the connecting plate (13) is bent and connected to an edge of the second surface (112) and extends in a direction facing away from the base mounting plate (12); and
wherein the connecting plate (13) is provided with a second weight reduction groove (131) corresponding to the first weight reduction groove (123), and a width of the first weight reduction groove (123) is less than a width of the second weight reduction groove (131).

13. The battery module according to claim 6, **characterized in that** the plate body (31) further comprises a first part (311) and a second part (312), the second part (312) is parallel to the first part (311) and connected to one side of the first part (311), and the first hollow structure (341) and the second hollow structure (342) are located on the first part (311); and
wherein the second part (312) is provided with a mounting groove (3121) facing the second plate (33) adjacent to the second part (312), and a groove bottom of the mounting groove (3121) is provided with a plurality of third reinforcing grooves (31211).

14. A battery pack, **characterized in that** the battery pack comprises the battery module according to any one of claims 1-13, a first fixing member, a second fixing member, and a case body;
wherein the battery module is accommodated inside the case body, the first fixing member passes through the first connecting hole (343) of the end plates (3) to fix the end plates (3) on the case body, and the second fixing member passes through the first mounting hole (1221) of the side plates (1) to fix the side plates (1) on the case body.

15. A vehicle, **characterized in that** the vehicle comprises the battery pack according to claim 14.
